(19)

Europäisches
Patentamt
European
Patent Office
Office européen
des brevets

(11) **EP 1 881 383 A2**

(12) **EUROPEAN PATENT APPLICATION**

(43) Date of publication:
**23.01.2008 Bulletin 2008/04**

(51) Int Cl.:
*G05B 19/4069* (2006.01)    *B25J 9/16* (2006.01)

(21) Application number: **07012740.2**

(22) Date of filing: **28.06.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **12.07.2006 JP 2006191701**

(71) Applicant: **Fanuc Ltd
Minamitsuru-gun,
Yamanashi 401-0597 (JP)**

(72) Inventors:
• **Nagatsuka, Yoshiharu
Minamitsuru-gun
Yamanashi 401-0511 (JP)**
• **Takeda, Toshiya
FANUC Dai3virakaramatsu
Yamanashi 401-0511 (JP)**

(74) Representative: **Thum, Bernhard
Wuesthoff & Wuesthoff
Patent- und Rechtsanwälte
Schweigerstrasse 2
81541 München (DE)**

(54) **Simulation device of robot system**

(57)    A simulation device displays a three-dimensional model of a robot system on a display device and simulates a robot system including a robot and an image pickup camera. The simulation device includes a display device for displaying a three-dimensional virtual space on a screen, a camera position determination unit for determining an installation position of the image pickup camera based on an image pickup range designated by the operator, optical characteristic information of the used image pickup camera, and required measurement precision, and a virtual image generator unit for generating a virtual image to be obtained by the image pickup camera based on the position of the image pickup camera in the three-dimensional virtual space and the optical characteristic information, thereby facilitating the determination of the suitable position of the image pickup camera and adjustment of the detection parameters.

Fig.1

EP 1 881 383 A2

**Description**

BACKGROUND OF THE INVENTION

1. Field of the Invention

The present invention relates to a simulation device for simulation of a robot system off line.

2. Description of the Related Art

In a robot system, generally a visual recognition device is used to recognize a workpiece and make the robot perform predetermined processing in accordance with the recognized position of the workpiece. For example, Japanese Unexamined Patent Publication No. 8-167800 discloses a part mounting device emitting light to a mark on a part and detecting the reflected light or passed light by a visual recognition device to recognize the part and perform predetermined processing on the part.

In such a robot system using a visual recognition device, it is necessary to adjust or determine an installation position of an image pickup camera of the visual recognition device or detection parameters suitable for an object to be detected so that the required measurement precision or detection precision is obtained. However, since the work of adjusting and determining the installation position or detection parameter setting of this image pickup camera requires specialized knowledge, it was difficult for an unskilled worker. Further, setting of the position of the image pickup camera or adjustment of the detection parameters for the detected object, etc., are performed by trial and error. Therefore, a very large number of work steps were required. Further, the work of adjusting and confirming the set position of the image pickup camera or detection parameter actually uses the detected object, image pickup camera and other devices. Therefore, an extremely long work time was required. In addition, when correcting the operation of a robot using the result of a workpiece position measured by a visual recognition device, the work of confirming if a measurement program and operating program were suitable was also performed using the robot system together with the actual image processing device and control equipment. Therefore, the on-site work was large and it was inefficient.

SUMMARY OF THE INVENTION

Accordingly, an object of the present invention is to provide a simulation device of a robot system enabling determination of a suitable installation position of an image pickup camera and adjustment of detection parameters for the image pickup camera off line without using an actual robot system.

In order to achieve this object, according to the present invention, there is provided a simulation device of a robot system, which includes a display device for displaying a three-dimensional virtual space on a screen to display a three-dimensional model of the robot system on a screen of the display device and simulate the robot system thereon, the robot system including a robot, an image pickup camera, and a peripheral device, the robot performing predetermined processing on a workpiece based on a position of the workpiece measured from an image obtained by the image pickup camera, wherein the simulation device of the robot system further includes an input device enabling an operator to designate an image pickup range to be picked up by the image pickup camera on the screen of the display device, a camera position determination unit for determining an installation position of the image pickup camera based on the image pickup range designated by the operator, optical characteristic information of the used image pickup camera, and required measurement precision, and a virtual image generator unit for generating a virtual image to be obtained by the pickup camera based on the position of the image pickup camera in the three-dimensional virtual space and the optical characteristic information of the image pickup camera.

The optical characteristic information of the image pickup camera includes a focal distance and an image pickup device size.

In the simulation device of the robot system, the virtual image generated by the virtual image generator unit is preferably displayed on the display device.

Also, the simulation device of the robot system preferably further includes a simulator unit using an image generated by the virtual image generator unit to simulate the operation of the robot system in accordance with an operating program prepared in advance.

By the worker designating an image pickup camera to be used and a range for image pickup, the camera position determination unit determines a suitable position for arrangement of the image pickup camera off line without using an actual robot system. Therefore, when determining an installation position of the pickup camera, there is no longer a need to actually use a workpiece and a robot system and, further, trial-and-error like processes by the worker become unnecessary. Further, if using the virtual image generated by the virtual image generator unit, it becomes possible to confirm whether a desired image has been obtained when the image pickup camera is arranged at the determined installation position, set a detection model required for detection of the workpiece from the image, and set the parameters for image processing, etc. without actually using an image pickup camera.

In addition, if including a simulator unit, it is possible to confirm whether the prepared operating program or measurement program functions suitably without using an actual robot system.

In this way, it is possible to determine the installation position of the image pickup camera or detection parameters etc. off line in advance. Therefore, it is possible to reduce the work required at the installation site and greatly shorten the work time.

BRIEF DESCRIPTION OF THE DRAWINGS

These and other objects, features, and advantages of the present invention will be described in more detail below based on preferred embodiments of the present invention with reference to the accompanying drawings, wherein:

FIG. 1 is a functional block diagram showing the overall configuration of a simulation device of a robot system according to the present invention;
FIG. 2 is a schematic view showing the overall configuration of a robot system simulated by a simulation device of a robot system according to the present invention;
FIG. 3 is a diagram showing an example of an image obtained by an image pickup camera of a visual recognition device of the robot system;
FIG. 4 is a flowchart showing the processing performed by the simulation device of the robot system according to the present invention;
FIG. 5 is a schematic view showing the principle of determination of the distance between a workpiece and an image pickup camera;
FIG. 6 is a flowchart of simulation of the operation of the robot system; and
FIG. 7 is a view of a user interface of the simulation device.

DETAILED DESCRIPTION

Embodiments of a simulation device 30 of a robot system 10 according to the present invention will be described blow with reference to the drawings.

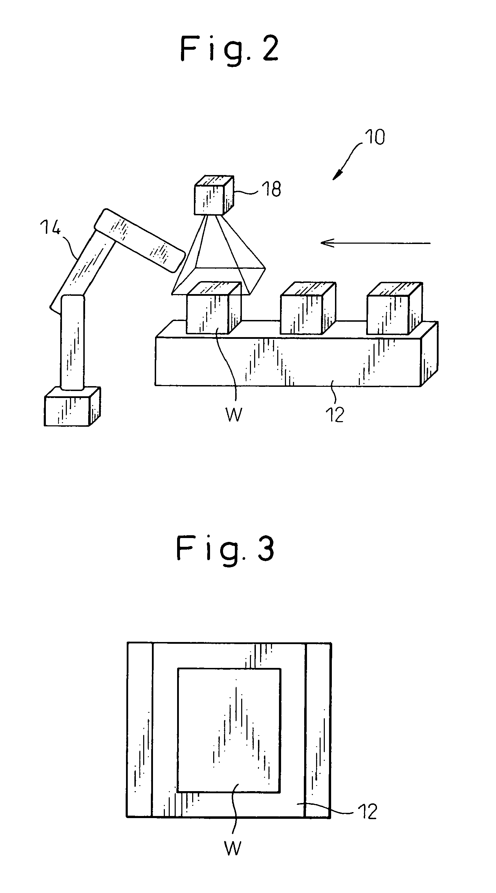

First, referring to FIG. 2, an example of a robot system 10 performing simulation by a simulation device 30 according to the present invention will be described. The robot system 10 includes a conveyance device 12 for conveying a workpiece W to be worked on, a robot 14 for gripping or performing other predetermined processing on the workpiece W conveyed by the conveyance device 12 to a predetermined position, and a visual recognition device 16 for detecting or measuring the position of the workpiece W or its specific part. As the conveyance device 12, a belt conveyor or roller conveyor or other suitable conveyance device can be used. The robot 14 used may be any type and is not particularly limited.

The visual recognition device 16 is constituted by an image pickup camera 18 for obtaining an image and an image processing device 20 for processing the obtained image, detecting the workpiece W or its specific part, and measuring the position. As the image pickup camera 18, a CCD camera etc. is generally used, but another type of camera may also be used. Various lenses may be selected and mounted on the image pickup camera 18 depending on the image pickup range or distance to the object to be picked up.

In this configuration of the robot system 10, the conveyance device 12 successively conveys workpieces W. When the workpiece W is arranged at a predetermined position, the visual recognition device 16 obtains an image as shown in FIG. 3, measures the accurate position of the workpiece W or its specific part, and has the workpiece W or its specific part gripped or otherwise processed by operation of the robot 14.

In the above robot system 10, it is necessary to determine the suitable installation position of the image pickup camera 18 of the visual recognition device 16, the detection model, and the parameters for detection of the workpiece in the image processing device 20 (hereinafter simply referred to as the "detection parameters") etc. and confirm the operation of the measurement program for measuring the position of the workpiece W or the operating program of the robot 14. The simulation device 30 according to the present invention can perform these operations off line without using the actual robot system 10 and thereby reduce the load on the worker.

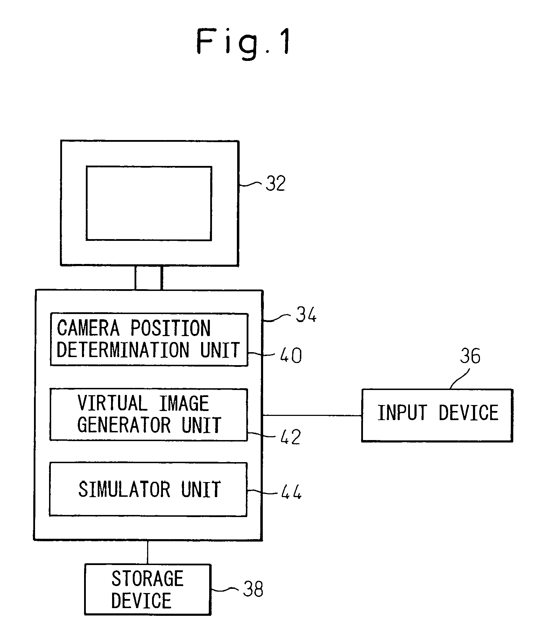

Referring to FIG. 1, the overall configuration of a simulation device 30 of the robot system 10 according to the present invention will be described. The simulation device 30 according to the present invention uses the three-dimensional model of the robot system 10 to simulate an image picked up by the image pickup camera 18 or the operation of the robot system 10 in the three-dimensional virtual space and includes a display or other display device 32, a processing device 34 for performing various processing, an input device 36, and a storage device 38. The processing device 34 is realized by for example a personal computer and includes a camera position determination unit 40, a virtual image generator unit 42, and a simulator unit 44. The input device 36 is used by the operator to designate a range to be picked up by the image pickup camera 18 on the screen of the display device 32 or input various data or commands to the simulation device 30. The input device 36 is realized by a keyboard, mouse, touch screen, etc. As the storage device 38, a RAM, ROM, hard disk, or other suitable device able to store data or a program may be used. The storage device 38 may be configured as a separate device from the processing device 34 or may be built in as part of the processing device 34.

The screen of the display device 32 displays three-dimensional models of the components arranged in the three-dimensional virtual space such as the workpiece W or the conveyance device 12, robot 14, image pickup camera 18 of the robot system 10. For the three-dimensional models of the components, use is made of models prepared in advance as CAD data etc. The three-dimensional models of the components in the three-dimensional virtual space may be arranged at the initial set positions of the three-dimensional models stored in advance in the storage device 38 or may be arranged at positions suitably designated by the operator using the input device 36.

The camera position determination unit 40 of the processing device 34 determines the installation position of the image pickup camera 18 based on the image pickup range designated by the operator, the optical characteristic information of the used image pickup camera 18, and the required measurement precision. The optical characteristic information includes a focal distance of a lens 18a of the image pickup camera 18, a size of an image pickup device 18b of the image pickup camera 18, etc. The storage device 38 stores a data base linking the types of the plurality of usable image pickup cameras 18 and their lenses 18a with their optical characteristic information. By the operator designating the type of image pickup camera 18 or lens 19a to be used, that data base is used to automatically determine the optical characteristic information.

The virtual image generator unit 42 of the processing device 34 predicts and generates the virtual image to be obtained by the image pickup camera 18 by simulation based on the positions of the three-dimensional models of the image pickup camera 18 and workpiece W in the three-dimensional virtual space and the optical characteristic information of the image pickup camera 18. The virtual image generated in this way is preferably displayed on the screen of the display device 32. When the screen of the display device 32 displays the image, the worker can visually confirm the suitability of the set position determined by the camera position determination unit 40 and can use that image to set the detection parameters etc. of the visual recognition device 16.

The simulator unit 44 of the processing device 34 uses the image generated by the virtual image generator unit 42 to simulate the operation of the robot system 10 in accordance with the operating program prepared in advance by the worker. For example, in accordance with the operating program prepared in advance, in the three-dimensional virtual space, the conveyance device 12 conveys the workpiece W to a predetermined position, the image pickup camera 18 picks up the image of the workpiece W, the workpiece W or its specific part is detected from the obtained image, its accurate position is measured, and the robot 14 is made to perform a gripping operation etc. based on the measured position of the workpiece W or its specific part, whereby the operation of the robot system 10 can be simulated. Due to this, it becomes possible to confirm whether the operating program and measurement program make the robot system 10 perform the desired operation without using the actual robot system 10.

These camera position determination unit 40, virtual image generator unit 42, and simulator unit 44 may, for example, be realized by a camera position determining program, virtual image generating program, and simulation program run on a CPU (central processing unit) of a personal computer or may be realized as independent units able to run these programs.

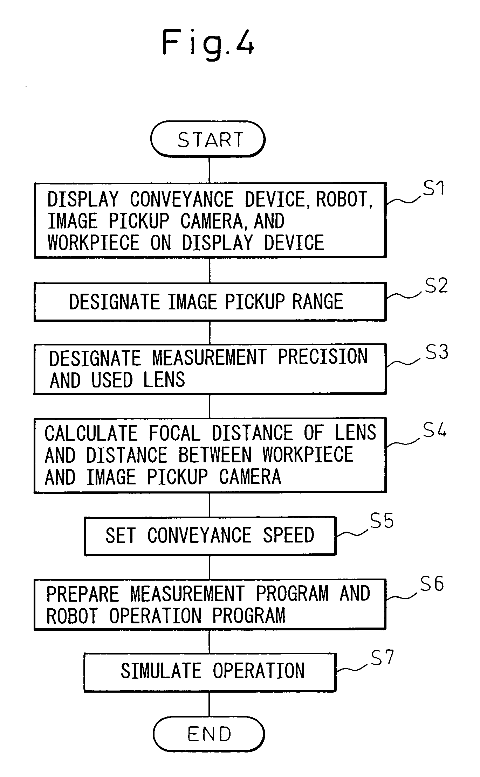

Next, referring to FIG. 4, the operation of the simulation device 30 of the robot system 10 shown in FIG. 1 will be described.

First, the display device 32 displays three-dimensional models of the conveyance device 12, robot 14, image pickup camera 18, and workpiece W based on CAD data prepared in advance (step S1). These three-dimensional models may be arranged in accordance with initial set positions stored in the storage device 38 or may be arranged at positions suitably designated by the operator using the input device 36. Next, the operator designates the range to be picked up by the image pickup camera 18 on the screen of the display device 32 using the input device 36 (step S2). The range to be picked up is usually determined based on the size of the workpiece W or its specific part to be detected and in consideration of the image pickup camera 18 and its lens 18a scheduled to be used or desired measurement precision. Next, the operator designates these through the input device 36 in accordance with the measurement precision displayed on the display device 32 and the type of lens 18a used (step S3). Note that the term "measurement precision" means an actual length or size corresponding to one pixel (length or size per pixel).

The camera position determination unit 40 of the processing device 34 determines the installation position of the image pickup camera 18 based on the image pickup range designated in this way, the required measurement precision, and the used type of lens 18a (step S4).

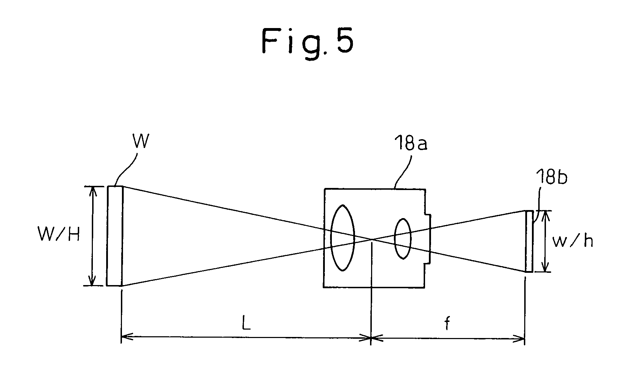

Here, referring to FIG. 5, the procedure by which the camera position determination unit 40 determines the installation position of the image pickup camera 18 will be described in detail. FIG. 5 is a schematic view showing the relationship between the distance L between the object to be picked up (here, the workpiece W) and the lens 18a of the image pickup camera 18, the distance between the lens 18a and the image pickup device 18b of the image pickup camera 18, that is, the focal distance f, the horizontal width W and vertical width H of the pickup range, and the horizontal width w and vertical width h of the image pickup device 18b. From FIG. 5, it can be seen that the relation of the following equation (1) stands among L, f, W, H, w, and h:

$$w/W=h/H=f/L \qquad (1)$$

If considering the measurement precision R plus this, the following equation (2) stands:

$$L=(f\times H\times R)/h=(f\times W\times R)/w \qquad (2)$$

On the other hand, if the lens 18a (that is, the image pickup camera 18) is designated, the focal distance f and the horizontal width w or vertical width h of the image pickup device are determined. Further, if the operator designates the image pickup range and measurement precision, the horizontal width W or vertical width H of the image pickup range and the measurement precision R are determined. Therefore, from equation (2), the distance L between the lens 18a and image pickup camera 18 and the object to be picked up is calculated.

For example, assume that the focal distance of the lens 18a of the used image pickup camera 18 is 16 mm and the horizontal width w of the image pickup device 18b is 8.8 mm and vertical width h is 6.6 mm. These values are set in the processing device 34 based on the data base stored in the storage device 38 by designation of the type of image pickup camera 18 and lens 18a used. Further, assume that the image pickup range and measurement precision are input by the operator as W=640 mm, H=480 mm, and R=0.1. This being the case, the distance L between the object to be picked up and the image pickup camera 18 is calculated as follows from equation (2).

$$L=(16 \text{ mm}\times 640 \text{ mm}\times 0.1)/8.8 \text{ mm}=116.4 \text{ mm}$$

or

$$L=(16 \text{ mm}\times 480 \text{ mm}\times 0.1)/6.6 \text{ mm}=116.4 \text{ mm}$$

If the distance L between the object to be picked up (that is, the workpiece W) and the image pickup camera 18 is determined in this way, the posture of the image pickup camera 18 is determined so that the line-of-sight vector, that is, the optical axis, of the image pickup camera 18 vertically intersects the plane of the workpiece W to be picked up. Further, the position (X, Y, Z) of the image pickup camera 18 can be determined so that the image pickup camera 18 is arranged at a position away from the point positioned on the plane of the workpiece W and at the center of the image pickup range by exactly a distance L determined as described above along the line-of-sight vector, that is, optical axis, of the image pickup camera 18. In this way, the camera position determination unit 40 of the processing device 34 can automatically determine the position and posture of the image pickup camera 18 by designation of the used image pickup camera 18, the required measurement precision, and the range to be picked up by the image pickup camera 18.

When the position and posture of the image pickup camera 18 are determined by the camera position determination unit 40, the operator inputs the conveyance speed of the conveyance device 12 by the input device 36 in accordance with a request from the simulation device 30 (step S5). Next, the operator prepares a measurement program for the visual recognition device 16 for detecting the workpiece W from the image picked up by the image pickup camera 18 and measuring the position of the workpiece W and an operating program for the robot system 10 for making the image pickup camera 18 pick up an image and the robot 14 operate to grip the workpiece based on the operation of the conveyance device 12 (step S6). At this time, in order to assist this operation by the operator, the virtual image generator unit 42 of the processing device 34 predicts and generates, based on the three-dimensional model, the virtual image of the workpiece W to be taken in the three-dimensional virtual space when the image pickup camera 18 is arranged at the set position and posture of the image pickup camera 18 determined by the camera position determination unit 40, and displays this image on the screen of the display device 32. Therefore, the operator can use this virtual image to confirm that the image of the desired range is obtained and set the detection parameters or detection model etc. for detection of the workpiece W. Further, this virtual image may be used for calibration of the image pickup camera 18. Next, the operator can simulate the operation of the robot system 10 including the conveyance device 12, the robot 14, and visual recognition device 16, based on the measurement program or operating program determined in the above way, the determined position and posture of the image pickup camera 18, the selected image pickup camera 18 and lens 18a, etc. (step S7).

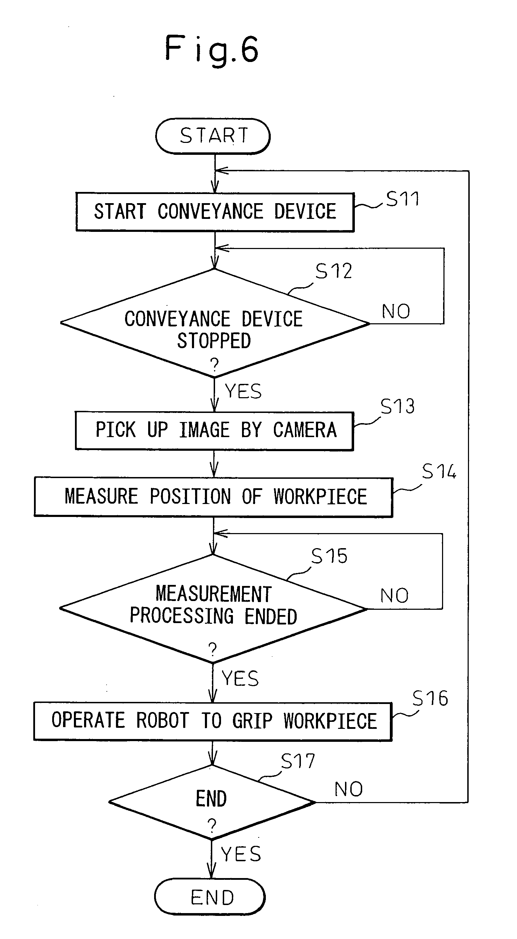

An example of simulation of the operation of the robot system 10 by the simulation device 30 according to the present invention will be described below with reference to FIG. 6.

First, the operating program is started up in the processing device 34 of the simulation device 30 and the conveyance device 12 is operated in the three-dimensional virtual space (step S11). The conveyance device 12 continues operating until the workpiece W is conveyed to a predetermined position (step S12). When the workpiece W is conveyed to the predetermined position, the conveyance device 12 is stopped and the image pickup camera 18 of the visual recognition device 16 picks up the image of the workpiece W in accordance with the pickup command (step S13). The image processing device 20 of the visual recognition device 16 detects the workpiece from the image obtained by the image pickup camera 18 and performs the workpiece position measurement processing for measuring the accurate position of the workpiece W (step S14). When the workpiece position measurement processing is finished (step S15), the robot 14 is moved to the position of the detected workpiece W and operates to grip the workpiece W (step S16). Further, steps S11 to S16 are repeated until the necessary number of workpieces W have finished being processed (step S17).

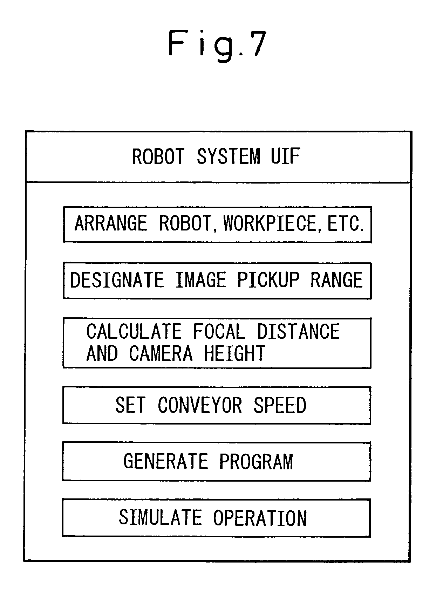

The series of operations, for example, are preferably completely ended by displaying a user interface as shown in FIG. 7 on the display device 32 of the simulation device 30 and having the operator successively execute processing in accordance with the display. Due to this, even a person unfamiliar with setting the visual recognition device 16 or setting the robot system 10 can easily set the robot system 10 having the visual recognition device 16.

While the invention has been described with reference to specific embodiments chosen for purpose of illustration, it should be apparent that numerous modifications could be made thereto by those skilled in the art without departing from the basic concept and scope of the invention.

**Claims**

1. A simulation device (30) of a robot system comprising a display device (32) for displaying a three-dimensional virtual space on a screen to display a three-dimensional model of the robot system on a screen of the display device (32) and simulate the robot system thereon, said robot system comprising a robot (14), an image pickup camera (18), and a peripheral device (12), said robot performing predetermined processing on a workpiece based on a position of the workpiece (W) measured from an image obtained by the image pickup camera (18), said simulation device (30) **characterized by** further comprising:

   an input device (36) enabling an operator to designate an image pickup range to be picked up by the image pickup camera (18) on the screen of the display device (32);
   a camera position determination unit (40) for determining an installation position of the image pickup camera (18) based on the image pickup range designated by the operator, optical characteristic information of the used image pickup camera (18), and required measurement precision; and
   a virtual image generator unit (42) for generating a virtual image to be obtained by the image pickup camera (18) based on the position of the image pickup camera (18) in the three-dimensional virtual space and the optical characteristic information of the image pickup camera (18).

2. The simulation device of the robot system according to claim 1, wherein the optical characteristic information of the pickup camera (18) includes a focal distance and an image pickup device size.

3. The simulation device of the robot system according to claim 1, wherein the virtual image generated by the virtual image generator unit (42) is displayed on the display device (32).

4. The simulation device of the robot system according to claim 1, further comprising a simulator unit (44) using an image generated by the virtual image generator unit (42) to simulate the operation of the robot system (10) in accordance with an operating program prepared in advance.

# Fig.1

```
                    ┌─────────────────┐
                    │  ┌───────────┐  │
                    │  │           │  │ ～32
                    │  │           │  │
                    │  └───────────┘  │
                    └────────┬────────┘
                             │
          ┌──────────────────┴──────────┐
          │                          ～ 34
          │  ┌────────────────────────┐ │
          │  │ CAMERA POSITION        │ │  ～ 40
          │  │ DETERMINATION UNIT     │ │
          │  └────────────────────────┘ │
          │                             │         36
          │  ┌────────────────────────┐ │      ┌──────────────┐
          │  │ VIRTUAL IMAGE          │ ├──────┤ INPUT DEVICE │
          │  │ GENERATOR UNIT         │ │      └──────────────┘
          │  └────────────────────────┘ │
          │                      ～ 42   │
          │  ┌────────────────────────┐ │
          │  │ SIMULATOR UNIT         │ │ ～ 44
          │  └────────────────────────┘ │
          └──────────────┬──────────────┘
                         │
               ┌─────────────────┐
               │ STORAGE         │ ～ 38
               │ DEVICE          │
               └─────────────────┘
```

Fig. 2

Fig. 3

# Fig.4

```
          ( START )
              │
┌─────────────────────────────────┐
│ DISPLAY CONVEYANCE DEVICE, ROBOT,│  S1
│ IMAGE PICKUP CAMERA, AND         │
│ WORKPIECE ON DISPLAY DEVICE      │
└─────────────────────────────────┘
              │
┌─────────────────────────────────┐
│   DESIGNATE IMAGE PICKUP RANGE   │  S2
└─────────────────────────────────┘
              │
┌─────────────────────────────────┐
│ DESIGNATE MEASUREMENT PRECISION  │  S3
│ AND USED LENS                    │
└─────────────────────────────────┘
              │
┌─────────────────────────────────┐
│ CALCULATE FOCAL DISTANCE OF LENS │  S4
│ AND DISTANCE BETWEEN WORKPIECE   │
│ AND IMAGE PICKUP CAMERA          │
└─────────────────────────────────┘
              │
┌─────────────────────────────────┐
│      SET CONVEYANCE SPEED        │  S5
└─────────────────────────────────┘
              │
┌─────────────────────────────────┐
│ PREPARE MEASUREMENT PROGRAM AND  │  S6
│ ROBOT OPERATION PROGRAM          │
└─────────────────────────────────┘
              │
┌─────────────────────────────────┐
│      SIMULATE OPERATION          │  S7
└─────────────────────────────────┘
              │
          ( END )
```

# Fig.5

# Fig.6

```
                    ( START )
                        │
                        ▼ ◄──────────────────────────┐
    ┌─────────────────────────────────┐ ⟋S11         │
    │   START CONVEYANCE DEVICE       │              │
    └─────────────────────────────────┘              │
                        │                            │
                        ▼ ◄──────────────┐           │
                      ╱   ╲  S12         │           │
                    ╱       ╲            │           │
                  ╱           ╲   NO     │           │
                ╱  CONVEYANCE   ╲────────┘           │
                ╲    DEVICE     ╱                    │
                  ╲  STOPPED  ╱                      │
                    ╲   ?   ╱                        │
                      ╲   ╱                          │
                        │ YES                        │
                        ▼                            │
    ┌─────────────────────────────────┐ ⟋S13        │
    │    PICK UP IMAGE BY CAMERA      │              │
    └─────────────────────────────────┘              │
                        │                            │
                        ▼                 S14        │
    ┌─────────────────────────────────┐             │
    │  MEASURE POSITION OF WORKPIECE  │             │
    └─────────────────────────────────┘              │
                        │                            │
                        ▼ ◄──────────────┐           │
                      ╱   ╲  S15         │           │
                    ╱       ╲            │           │
                  ╱           ╲   NO     │           │
                ╱ MEASUREMENT  ╲────────┘           │
                ╲  PROCESSING   ╱                    │
                  ╲  ENDED    ╱                      │
                    ╲   ?   ╱                        │
                      ╲   ╱                          │
                        │ YES                        │
                        ▼                            │
    ┌─────────────────────────────────┐ ⟋S16        │
    │  OPERATE ROBOT TO GRIP WORKPIECE│             │
    └─────────────────────────────────┘              │
                        │   S17                      │
                        ▼                            │
                      ╱   ╲         NO               │
                    ╱  END  ╲───────────────────────┘
                    ╲   ?   ╱
                      ╲   ╱
                        │ YES
                        ▼
                    ( END )
```

# F i g.7

```
ROBOT SYSTEM UIF

    ARRANGE ROBOT, WORKPIECE, ETC.

    DESIGNATE IMAGE PICKUP RANGE

    CALCULATE FOCAL DISTANCE
    AND CAMERA HEIGHT

    SET CONVEYOR SPEED

    GENERATE PROGRAM

    SIMULATE OPERATION
```

## EP 1 881 383 A2

**REFERENCES CITED IN THE DESCRIPTION**

**Patent documents cited in the description**

- JP 8167800 A